# EUROPÄISCHE PATENTSCHRIFT

(11) **EP 0 505 829 B1**
(45) Veröffentlichungstag und Bekanntmachung des Hinweises auf die Patenterteilung: **02.01.1997**
(21) Anmeldenummer: 92104121.6
(22) Anmeldetag: 11.03.1992
(51) Int. Cl.: H04B 10/08

(54) **System für optische Signalübertragung, insbesondere optisches Kabelfernsehsystem, mit Überwachungs- und Dienstkanaleinrichtung**
System for optical signal transmission, particularly optical cable TV system, with monitoring and service channel device
Système de transmission de signal optique, particulièrement système de transmission de télévision par câble, avec dispositif pour la surveillance et les canaux de service

(30) Priorität: 23.03.1991 DE 4109683
(43) Veröffentlichungstag der Anmeldung: 30.09.1992
(73) Patentinhaber: Alcatel SEL Aktiengesellschaft, D-70435 Stuttgart (DE); ALCATEL N.V., NL-1077 XX Amsterdam (NL)
(72) Erfinder: Heidemann, Rolf, Dr., W-7146 Tamm (DE)
(74) Vertreter: Kugler, Hermann, Dipl.-Phys.

(56) Entgegenhaltungen:
- EP-A- 0 415 438
- PATENT ABSTRACTS OF JAPAN vol. 13, no. 280 (E-779)1989 & JP-A-10 65 938
- PATENT ABSTRACTS OF JAPAN vol. 12, no. 337 (E-657)1988 & JP-A-63 099 633

## Beschreibung

Der Wunsch nach Übertragungssystemen, in welchen die Signale bis hin zum Endgerät (dem "Terminal", was TV-Empfänger, Heimcomputer etc. sein kann) optisch übertragen werden, ist heute offenkundig. Dieser Wunsch ist unter anderem dadurch begründet, daß bei optischer Übertragung die Signalbandbreite weit größer gewählt werden kann als bei elektrischer Übertragung. Ein derartiges, wunschgemäßes System ist schematisch in der Zeitschrift "Funkschau", Nr. 22, 1990, Seite 56 beschrieben.

Das beschriebene System sieht nirgendwo eine Signalüberwachung vor. Jedoch übernehmen Netzbetreiber bis zu einem bestimmten Punkt in der Übertragungsstrecke die Verantwortung für die Qualität des zu übertragenden Signals. Sie verlangen deshalb vom Netzhersteller eine Einrichtung, die die Signalüberwachung an diesem Punkt ermöglicht. (Im weiteren wird dieser Punkt "Überwachungspunkt" genannt.)

Es ist Aufgabe der Erfindung, ein System anzugeben, welches eine solche Signalüberwachung erlaubt.

Aus "Patent abstracts of Japan", vol. 13, no. 280 (E-779) 1989 & JP-A-10 65 938 (Nippon), Zusammenfassung, ist ein System mit Merkmalen des Oberbegriffs des Anspruchs 1 bekannt. Die Übertragung eines optischen Überwachungssignals zusätzlich zu einem optischen Nutzsignal mit anderer Wellenlänge dient dort dazu, während der Übertragung des Nutzsignals die Dämpfung der optischen Übertragungsleitung am Ort des das Ende der Übertragungsleitung bildenden Nutzsignal-Empfängers zu messen.

Ein anderes optisches Übertragungssystem, bei dem zusätzlich zu einem optischen Nutzsignal ein optisches Überwachungssignal von einem Sender zu einem Empfänger übertragen wird, ist aus "Patent Abstracts of Japan", vol. 12, no. 337 (E-657) 1988 & Jp-A-63 099 633 (NEC), Zusammenfassung, bekannt. Dort dient das optische Hilfssignal nicht zur Messung der Qualität oder Dämpfung des übertragenen optischen Nutzsignals, sondern zur Überwachung der Funktionsfähigkeit der optischen Übertragungsstrecke. Die Mittel zum Detektieren des optischen Überwachungssignals befinden sich am Ende der Übertragungsstrecke. Ein Rückmeldungssignal zum optischen Sender gibt es nur dann, wenn der Empfang des optischen Überwachungssignals abbricht. Das Rückmeldesignal wird dann über eine weitere Leitung zum Sender übertragen.

Die oben formulierte Aufgabe wird erfindungsgemäß wie in Anspruch 1 gelöst. Weiterbildungen ergeben sich aus den Unteransprüchen.

In den herkömmlichen Ansätzen zur Lösung dieser Aufgabe ist es notwendig, das optische Signal in ein elektrisches umzuwandeln. Ein derartiger Lösungsvorschlag ist in Günter Domann, J. of Ligtwave Technology, Vol. 6, 1988, Seiten 1720-1727 beschrieben.

Die erfindungsgemäße Lösung macht die Umwandlung des optischen Nutzsignals in ein elektrisches unnötig. Außerdem eignen sich die Lösungsmittel gleichzeitig zur Anwendung für einen sogenannten Dienstkanal, d. h. es eröffnet sich die Möglichkeit einer interaktiven Kommunikation zwischen Überwachungspunkt und Sender.

Das Prinzip besteht darin, daß der Sender außer dem eigentlichen Nutzsignal auch ein Hilfssignal aussendet, und zwar mit einer anderen Wellenlänge. Dank der unterschiedlichen Wellenlängen kann das Hilfssignal am Überwachungspunkt aus dem Lichtwellenleiter ausgekoppelt werden und dann zur indirekten Qualitätsüberwachung des Nutzsignals verwendet werden.

Das Hilfssignal wird, nachdem es vom Nutzsignal abgekoppelt wurde, in ein elektrisches Signal umgewandelt und analysiert. Die Analyseergebnisse werden in Form eines Rückmeldesignals zum Sender gesendet. Der Sender steuert aufgrund der im Rückmeldesignal enthaltenen Information die weitere Aussendung von Nutz- und Hilfssignal.

Das Hilfssignal muß nicht kontinuierlich gesendet werden, sondern kann auch nur von Zeit zu Zeit gesendet werden. Es kann analoger oder digitaler Art sein, ein Testsignal mit veränderlichem oder unveränderlichem Nachrichteninhalt sein, ein Sprachsignal des Bedienungspersonals und vieles mehr sein. Das gleiche gilt für das Rückmeldesignal.

Man erkennt, daß das erfindungsgemäße System auch zur interaktiven Kommunikation zwischen Einheiten oder Personen am Überwachungspunkt einerseits und beim Sender andererseits verwendet werden kann. Diese Verwendung entspricht der eines Dienstkanals.

Die Erfindung wird nun anhand der einzigen Zeichnung näher erläutert. Diese Zeichnung enthält drei Figuren. Es zeigen:
- Fig. 1: eine schematische Darstellung des Systems nach Anspruch 1,
- Fig. 2: eine schematische Darstellung des Systems nach Anspruch 2, und
- Fig. 3: eine alternative Ausgestaltung des Systems von Fig. 2.

Die Figuren werden im folgenden genauer erklärt.

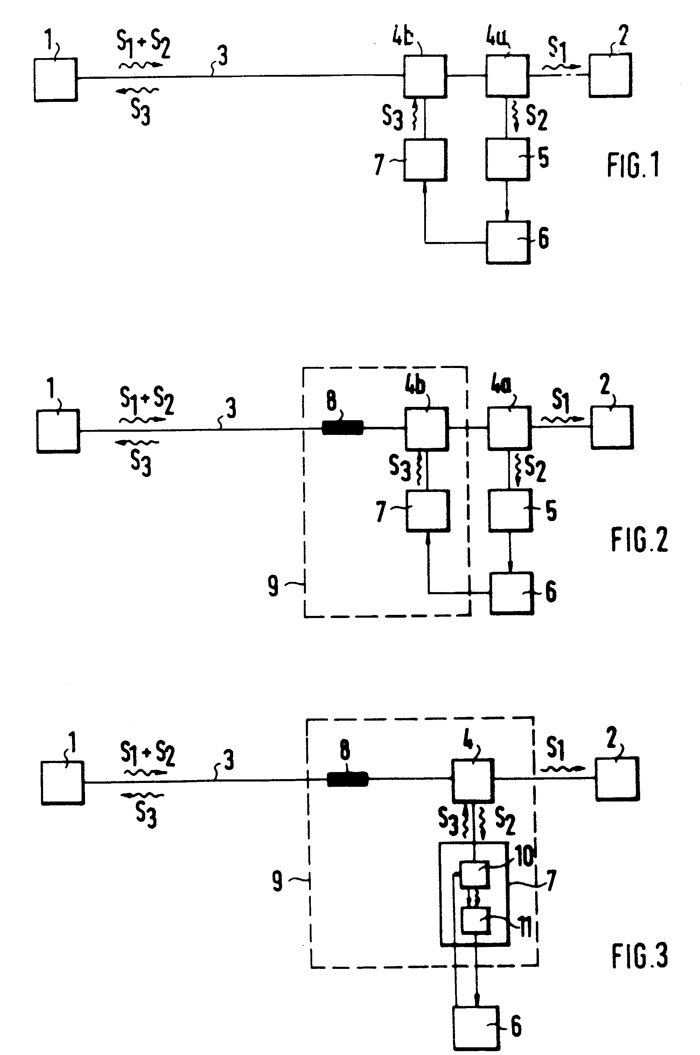

In Fig. 1 sieht man einen Sender 1, einen Empfänger 2, einen diese verbindenden Lichtwellenleiter 3, einen Überwachungspunkt mit einem Entkoppler 4a und einem Koppler 4b, eine Photodiode 5, eine Überwachungseinrichtung 6, eine Lichtquelle 7, ein Nutzsignal S₁, ein Hilfssignal S₂ und ein Rückmeldesignal S₃. Der Entkoppler 4a koppelt das Hilfssignal S₂ aus dem Lichtwellenleiter 3 aus, so daß es zur Photodiode 5 geführt werden kann. Diese wandelt das optische Hilfssignal S₂ in ein elektrisches um. Die Überwachungseinrichtung 6 analysiert es und erzeugt zusammen mit der Lichtquelle 7 das optische Rückmeldesignal S₃. Letzteres wird vom Koppler 4b nutzsignalgegenläufig in den Lichtwellenleiter 3 eingekoppelt und überbringt so dem Sender 1 Informationen, die er für die weitere Aussendung des Nutz- S₁ und des Hilfssignals (S₂) verwerten kann.

Der Sender kann zum Beispiel Teil der Zentrale eines optischen Kabelfernsehnetzes sein, der Empfänger ein TV-Gerät, und der Überwachungspunkt ein Hausanschlußpunkt oder ein sogenannter Netzabschlußpunkt. Abgesehen davon kann die Erfindung im Zusammenhang mit beliebigen Anwendungsfällen verwendet werden, bei denen ein Sender über einen Lichtwellenleiter mit einem Empfänger oder über ein Lichtwellenleiternetz mit vielen Empfängern verbunden ist und irgendwo zwischen Sender und dem oder den Empfängern eine Signalüberwachung stattfinden soll.

Eine vorteilhafte Weiterentwicklung der Erfindung besteht darin, die Signalüberwachung mit einer Signalverstärkung zu verbinden. Wird dazu ein faseroptischer Verstärker mit einem lichtverstärkenden (d.h. z.B. Erbium-dotierten) Faserstück eingesetzt, dann kann nämlich dessen Pumplichtquelle gleichzeitig als Lichtquelle zur Erzeugung des Rückmeldesignals verwendet werden. Dazu koppelt man das Pumplicht gegenläufig zum Nutzsignal in die lichtverstärkende Faser ein. Somit kommt ein Teil des Pumplichts (nämlich jener, der weder im lichtverstärkenden Faserstück noch im Lichtwellenleiter absorbiert wurde) bis zum Sender. Die Überwachungseinrichtung erzeugt ein vorerst elekrisches Rückmeldesignal und moduliert damit die Pumlichtquelle. Somit überbringt das Pumplicht eine Nachricht vom Überwachungspunkt zum Sender. Die Nutzung des Pumplichts als Nachrichtenträger für beliebige Signale ist Gegenstand einer älteren Anmeldung (P 40 36 327.9).

Die Modulation des Pumplichts geschieht in Form von Intensitätsmodulation. Dabei muß die Modulationsfrequenz genügend hoch gewählt werden, damit nicht auch der Verstärkungsfaktor des lichtverstärkenden Faserstücks moduliert wird. Die Bandbreite des Rückmeldesignals andererseits muß so klein gewählt werden, daß das Signal nach seinem Weg bis hin zum Sender, d.h. trotz der Dämpfung, die es auf diesem Weg erfährt, noch interpretiert werden kann. Dies setzt aber keine das Prinzip störende Grenze.

Ein Ausführungsbeispiel für die erfindungsgemäße Kombination zwischen Signalüberwachung und Signalverstärkung ist in Figur 2 gezeigt. Dort entsprechen alle Elemente jenen der Figur 1, nur daß ein lichtverstärkendes Faserstück 8 hinzukommt, daß die Wellenlänge des Signals S₃ die Pumpwellenlänge ist und daß der innere Aufbau der Überwachungseinrichtung 6 erforderlichenfalls ein anderer ist.

Bei entsprechender Wahl der Lichtquelle und der Wellenlänge des Hilfssignals (z.B. für λ₃ = 980 nm und λ₂ = 1300 nm) ist erstere für letzteres transparent. In diesem Fall kann das Hilfssignal durch die Lichtquelle hindurchgeführt werden, ohne daß diese von ihm gestört wird und ohne daß es von ihr verändert wird. Dies erlaubt eine Vereinfachung der Systeme aus Figur 1 und 2. Die vereinfachte Version des Systems von Figur 2 ist in Figur 3 gezeigt. Die Lichtquelle 7 aus Fig. 3 enthält zusätzlich zu ihrem Laser 10 eine Laserrücklichtdiode 11, die üblicherweise dazu dient, zwecks Überwachung des Lasers dessen Rücklicht zu empfangen.

Bei der Anordnung von Fig. 3 trifft nicht nur, wie üblich, das Laserrücklicht auf die Laserrücklichtdiode, sondern auch das Hilfssignal. Da das Laserrücklicht hauptsächlich niederfrequente, das Hilfssignal hingegen hauptsächlich hochfrequente Komponenten enthält, können die beiden Signale problemlos in der Überwachungseinrichtung voneinander getrennt und separat verarbeitet werden.

Die Analyse des Laserrücklichts gibt Aufschluß über den Laserzustand. Das Rücklicht kann, wie an sich üblich, auch dazu verwendet werden, die mittlere Pumpleistung des Lasers zu regulieren.

Wie in Fig. 3 angedeutet, führt von der Lichtquelle 7, genauer, von deren Laserrücklichtdiode (11), eine Leitung zur Überwachungseinrichtung 6, über die das empfangene Hilfssignal und das aus dem Laserrücklicht entstandene elektrische Signal zur Überwachungseinrichtung 6 gelangen. Eine zweite Leitung zwischen der Überwachungseinrichtung 6 und der Lichtquelle 7, genauer ihrem Laser (10), dient dazu, ein elektrisches Rückmeldesignal dem Laser zuzuführen, welcher es in ein optisches Rückmeldesignal umwandelt.

Es bestehen nun viele Analysemöglichkeiten, die in den elektrischen Schaltkreis eingebaut werden können. Z.B. können die Signalstärke, der Signal-Rauschabstand, der Laserzustand etc. ermittelt werden.

Da nicht das eigentliche Nutzsignal analysiert wird, sondern nur das erwähnte Hilfssignal, können aus der Übertragungsqualität des Hilfssignals Rückschlüsse auf die Übertragungsqualität des Nutzsignals gezogen werden. Bei den heute verwendeten Lichtwellenleitern ist das Verhältnis der Dämpfung auf einer gegebenen Strecke von zwei Signalen unterschiedlicher Wellenlänge bekannt, so daß aus der Dämpfung des Hilfssignals auf die des Nutzsignals rückgeschlossen werden kann. Im krassesten Fall läßt natürlich ein Ausbleiben des Hilfssignals auf eine Unterbrechung der Übertragungsstrecke schließen.

Wie bereits erwähnt, lassen sich S₂ und S₃ auch zur Einrichtung eines sogenannten Dienstkanals verwenden.

Abschließend sei noch vermerkt, daß das Nutzsignal sowie das Hilfssignal sich selbstverständlich aus mehreren Signalen zusammensetzen können und daß es auch als erfindungsgemäß zu betrachten ist, mehrere Hilfssignale auf mehreren Wellenlängen zu verwenden und an unterschiedlichen Punkten in der Übertragungsstrecke zur Überwachung des Nutzsignals oder der Nutzsignale oder zu Dienstkanalzwecken heranzuziehen.

## Patentansprüche

1. System zur durchgehend optischen Übertragung eines Nutzsignals von einem Sender über einen Lichtwellenleiter (3) oder ein Lichtwellenleiternetz bis hin zum Empfänger, bei dem der Sender (1) außer dem Nutzsignal (S₁) auch ein Hilfssignal (S₂) aussendet und das Nutzsignal und das Hilfssignal mit unterschiedlichen Wellenlängen über denselben Lichtwellenleiter (3) oder dasselbe Lichtwellenleiternetz in Richtung Empfänger (2) übertragen werden,
**dadurch gekennzeichnet,** daß an einem gewünschten Punkt in der Übertragungsstrecke Mittel (4a, 4b, 5, 6, 7) vorhanden sind, um das Hilfssignal (S₂) auszukoppeln und zu analysieren und die Analyseergebnisse sowie gegebenenfalls andere Informationen als Rückmeldesignal (S₃) über denselben Lichtwellenleiter (3) oder dasselbe Lichtwellenleiternetz zum Sender (1) zu übertragen, und daß der Sender Mittel besitzt, um abhängig vom Rückmeldesignal die weitere Aussendung des Nutz- und des Hilfssignals zu steuern.

2. System nach Anspruch 1, dadurch gekennzeichnet, daß das Nutzsignal (S₁) und das Hilfssignal (S₂) vor dem gewünschten Punkt einen faseroptischen Verstärker (9), der eine Pumplichtquelle (7) enthält, durchlaufen, und daß die Pumplichtquelle (7) gleichzeitig zum Aussenden des Rückmeldesignals (S₃) dient.

3. System nach Anspruch 2, dadurch gekennzeichnet, daß die Wellenlänge, bei der das Hilfssignal (S₂) übertragen wird, und der Laser der Pumplichtquelle (7) so gewählt sind, daß das Hilfssignal durch den Laser hindurch geleitet werden kann, ohne daß das Hilfssignal dadurch verändert wird und ohne daß der Laser von ihm gestört wird.

4. System nach Anspruch 1 oder 3, dadurch gekennzeichnet, daß die Mittel (6, 7) zum Senden des Rückmeldesignals (S₃) eine Lichtquelle 7 mit einem Laser (10) und einer Laserrücklichtdiode (11) enthalten und daß diese Laserrücklichtdiode sowohl das Laserrücklicht wie auch das Hilfssignal (S₂) empfängt.

## Claims

1. System for optically transmitting a useful signal from a transmitter over an optical waveguide (3) or a fiber-optic network to a receiver wherein the transmitter (1) transmits an auxiliary signal (S₂) in addition to the useful signal (S₁), and wherein the useful signal and the auxiliary signal are transmitted over the same optical waveguide (3) or the same fiber-optic network toward the receiver (2) at different wavelengths,
**characterized** in that at a desired point in the transmission link, means (4a, 4b, 5, 6, 7) are provided for extracting and analyzing the auxiliary signal (S₂) and for transmitting the results of the analysis and possibly other information as a return information signal (S₃) over the same optical waveguide (3) or the same fiber-optic network to the transmitter (1), and that the transmitter includes means for controlling the further transmission of the useful signal and the auxiliary signal in accordance with the information in the return information signal.

2. A system as claimed in claim 1, characterized in that before said desired point, the useful signal (S₁) and the auxiliary signal (S₂) pass through a fiber-optic amplifier (9) comprising a pump source (7), and that the pump source (7) also serves to transmit the return information signal (S₃).

3. A system as claimed in claim 2, characterized in that the wavelength at which the auxiliary signal (S₂) is transmitted and the laser of the pump source (7) are chosen so that the auxiliary signal can be passed through the laser without being changed thereby and without interfering with the operation of the laser.

4. A system as claimed in claim 1 or 3, characterized in that the means (6, 7) for transmitting the return information signal (S₃) include a light source (7) with a laser (10) and a photodiode for receiving both the backface emission of the laser and the auxiliary signal (S₂).

## Revendications

1. Système pour la transmission optique de bout en bout d'un signal utile d'un émetteur à un récepteur, en passant par une fibre optique (3) ou un réseau de fibres optiques, dans lequel l'émetteur (1) émet, outre le signal utile (S₁), un signal auxiliaire (S₂), le signal utile et le signal auxiliaire étant transmis, avec des longueurs d'onde différentes, par l'intermédiaire de la même fibre optique (3) ou du même réseau de fibres optiques en direction du récepteur (2), caractérisé en ce que des moyens (4a, 4b, 5, 6, 7) sont prévus en un point souhaité du trajet de transmission, pour désaccoupler et analyser le signal auxiliaire (S₂) et transmettre à l'émetteur (1) les résultats de l'analyse, ainsi qu'éventuellement d'autres informations, sous forme de signal en retour (S₃) par l'intermédiaire de la même fibre optique (3) ou du même réseau de fibres optiques, et en ce que l'émetteur comprend des moyens pour commander, en fonction du signal en retour, la poursuite de l'émission du signal utile et du signal auxiliaire.

2. Système suivant la revendication 1, caractérisé en ce que le signal utile (S₁) et le signal auxiliaire (S₂) traversent avant le point souhaité un amplificateur (9) à fibre optique comprenant une source de lumière de pompage (7) et en ce que la source de lumière de pompage (7) sert également à émettre le signal en retour (S₃).

3. Système suivant la revendication 2, caractérisé en ce que la lonqueur d'onde à laquelle le signal auxiliaire (S₂) est transmis, ainsi que le laser de la source de lumière de pompage (7) sont choisis de telle manière que le signal auxiliaire peut être conduit par le laser sans être modifié par ce processus, et sans détruire le laser.

4. Système suivant la revendication 1 ou 3, caractérisé en ce que les moyens (6, 7) d'émission du signal en retour (S₃) comprennent une source de lumière (7) comportant un laser (10) et une diode de lumière en retour laser (11), et en ce que ladite diode de lumière en retour à laser reçoit d'une part la lumière en retour laser et d'autre part le signal auxiliaire (S₂).
